# EUROPÄISCHE PATENTANMELDUNG

(11) **EP 0 927 733 A1**
(43) Veröffentlichungstag der Anmeldung: **07.07.1999**
(21) Anmeldenummer: 98123867.8
(22) Anmeldetag: 16.12.1998
(51) Int. Cl.: C08G 77/02, C08G 77/06

(54) **Verfahren zur Herstellung von Polyorganosiloxanharzen, die mono- und tetrafunktionelle Einheiten enthalten**

(30) Priorität: 02.01.1998 DE 19800021
(71) Anmelder: Wacker-Chemie GmbH, 81737 München (DE)
(72) Erfinder: Käppler, Klaus Dr. rer. nat., 01326 Dresden (DE); Lehnert, Robert Dr. rer. nat., 01069 Dresden (DE); Hoffmann, Sabine, 01445 Radebeul (DE); Schöley, Toni, 01665 Diera-Zehren (DE)

(57) **Zusammenfassung**

Die Erfindung betrifft ein Verfahren zur Herstellung von Polyorganosiloxanharzen, die mono- und tetrafunktionelle Einheiten enthalten, durch Hydrolyse und Kondensation eines Gemisches aus Alkylsilikaten und Alkylsilanen und/oder deren Hydrolysaten und SiCl-Gruppen aufweisenden Verbindungen.

## Beschreibung

Die Erfindung betrifft ein Verfahren zur Herstellung von Polyorganosiloxanharz, das mono- und tetrafunktionelle Einheiten enthält, durch Hydrolyse und Kondensation eines Gemisches aus Alkylsilikaten und Alkylsilanen und/oder deren Hydrolysaten und SiCl-Gruppen aufweisenden Verbindungen.

Verfahren zur Herstellung von Polyorganosiloxanharzen, welche aus monofunktionellen M-Einheiten (R₃SiO_{1/2}) und tetrafunktionellen Q-Einheiten (SiO_{4/2}) bestehen, sind bekannt. Die meisten Verfahren verwenden Tetraalkylsilicate als Quelle für Q-Einheiten. Die M-Einheiten werden üblicherweise in Form von hydrolysierbaren Trialkylsilanen eingebracht. Die bei der Umsetzung stattfindende Hydrolyse/Kondensationsreaktion muß, um die gewünschten Produkte zu erhalten, katalysiert werden. Als dafür geeignet haben sich insbesondere saure Verbindungen erwiesen. Üblicherweise wird die Reaktion in einem organischen Lösemittel durchgeführt.

Ein in US 2,857,356 beschriebenes Verfahren geht von einer Mischung von Tetraalkylsilikat und einem Trialkylchlorsilan in einem mit Wasser nicht mischbaren Lösungsmittel aus und setzt dieses mit Wasser um, wobei die Harzlösung durch Phasentrennung von der alkoholischen Salzsäure abgetrennt wird. Durch das Zweiphasensystem ist die Reaktion schlecht kontrollierbar. Nachteilig ist ferner der Anfall großer Mengen konzentrierter alkoholischer Salzsäure und die Verschiebung der stöchiometrischen Bilanz durch die Bildung von flüchtigen Nebenprodukten und die in der wäßrigen Salzsäure gelösten, Q-Einheiten enthaltenden Siloxane. Die Harze enthalten einen hohen Anteil an siliciumgebundenen OH-Gruppen.

Um den Anfall an alkoholischer Salzsäure zu minimieren, wird in EP 195 936 die Verwendung eines Trialkylalkoxysilanes bzw. dessen Disiloxan und wäßriger Salzsäure anstelle von Trialkylchlorsilanen vorgeschlagen. Hierbei wird das Alkylsilikat zu der heterogenen Mischung aus Silanen und Salzsäure gegeben. Brauchbare Produkte werden mit diesem Verfahren nur erhalten, wenn das Gemisch mindestens 5 Gew.-% HCl enthält. Aus diesem Grund muß Salzsäure mit mindestens 10 Gew.-% Chlorwasserstoff eingesetzt werden. Außerdem werden flüchtige Oligomere gebildet, die die stöchiometrische Bilanz verschlechtern. Da während der gesamten Reaktionszeit ein heterogenes System vorliegt, ist die Umsetzung schlecht zu steuern.

Deshalb wurde vorgeschlagen, Triorganoalkoxysilane bzw. deren Hydrolysate mit Tetraalkylsilicaten in Gegenwart stärker katalytisch wirksamer Verbindungen, welche dann in geringerer Menge eingesetzt werden können, umzusetzen. So beschreibt EP 529 547 die Verwendung von Alkylsilicat und Disiloxan in Kombination mit einer starken Protonen-Säure, wie einer Schwefel- oder Phosphorsäure, mit konzentrierter Salzsäure als Katalysator. EP 294 277 verwendet eine Sulfonsäure und Phosphornitrilchlorid zur Umsetzung von Alkylsilicaten mit oligomeren Siloxanen. In EP 604 847 wird eine mehrprotonige Säure, vorzugsweise Schwefel- oder Phosphorsäure verwendet, deren Neutralisation in mehreren Stufen erfolgt.

Wiederum die Verwendung insbesondere von Salzsäure, jedoch nur in katalytischen Mengen (vorzugsweise 0,2 bis 50 mmol, bezogen auf 1000 g Reaktionsmasse), was die Durchführung des Verfahrens durchgängig in homogener Phase ermöglicht, beschreibt EP 640 109. Problematisch erscheint die Dosierung kleiner Mengen Salzsäure und vor allem deren homogene Verteilung im Reaktionsgemisch (im Beispiel 1 werden 1,9 g 20 %-ige Salzsäure im Verhältnis zu 1475 g Reaktionsmasse verwendet), da nach EP 640 109, bei einer Erhöhung der Säure-Konzentration keine Homogenität der Reaktionsmasse erreicht wird.

Der entscheidende Nachteil derjenigen Verfahren, bei welchen die katalytisch wirkenden Verbindungen zum Silan- bzw. Siloxangemisch zudosiert werden, besteht darin, daß, entweder aufgrund der Unlöslichkeit von Wasser bzw. von wäßrigen Säuren in den eingesetzten Siloxanen oder aufgrund der üblichen Zugabedosierung, an der Dosierstelle partiell hohe Katalysatorkonzentrationen auftreten, was dazu führt, daß an dieser Stelle unkontrollierbare Reaktionen ablaufen. Erst nach Bildung der löslichkeitsverbessernd wirkenden Silanole kann sich der Katalysator in der gesamten Reaktionsmischung verteilen und erst dann liegt der Katalysator in der angegebenen (Durchschnitts)Konzentration vor.

Die Aufgabe der Erfindung bestand darin, ein Verfahren zur Herstellung von Polyorganosiloxanharzen, die mono- und tetrafunktionelle Einheiten enthalten bereitzustellen, welches eine sehr gute Reproduzierbarkeit gewährleistet, von Tetraalkylsilikat und Alkylalkoxysilanen und/oder deren Hydrolysaten ausgeht und dabei örtlich hohe Katalysatorkonzentrationen vermeidet.

Der Gegenstand der Erfindung ist ein Verfahren zur Herstellung von Polyorganosiloxanharzen, die mono- und tetrafunktionelle Einheiten enthalten, welches dadurch gekennzeichnet ist, daß in einer 1. Stufe ein Gemisch aus
(a) mindestens einem Silan der allgemeinen Formel

   Si(OR)₄ (I),

   wobei R gleich oder verschieden sein kann und einen einwertigen Alkylrest mit 1 bis 4 Kohlenstoffatomen darstellt, oder dessen Teilhydrolysat,
(b) mindestens einem Silan der allgemeinen Formel

   R¹₃SiOR (II),

   und/oder dessen Hydrolysat der allgemeinen Formel

   R¹₃SiOSi R¹₃ (III),

   wobei R die oben genannte Bedeutung aufweist und R¹ gleich oder verschieden sein kann und Wasserstoff, verzweigte und/oder unverzweigte, gesättigte und/oder ungesättigte, substituierte und/oder unsubstituierte, lineare, cyclische, aliphatische und/oder aromatische Kohlenwasserstoffreste mit 1 bis 18 Kohlenstoffatomen bedeutet,
(c) und mindestens einer monomeren und/oder oligomeren Verbindung, welche mindestens eine SiCl-Gruppe aufweist,
mit der hinsichtlich der hydrolysierbaren Gruppen äquivalenten Menge Wasser umgesetzt und anschließend aus dem erhaltenen homogenen Reaktionsgemisch
in einer 2. Stufe
durch Zugabe von Wasser und/oder von einem mit Wasser nicht mischbaren Lösemittel eine wäßrigalkoholische Phase abgetrennt wird.

Die monomere, mindestens eine SiCl-Gruppe aufweisende Verbindung kann der allgemeinen Formel

R¹_{y}SiCl_{4-y} (IV) entsprechen,

wobei R¹ die oben angegebene Bedeutung aufweist und y Werte zwischen 0 und 3 annimmt, bevorzugte Reste R¹ sind Methyl-, Vinyl- oder Ethylgruppen, beispielsweise werden Siliciumtetrachlorid, Methylvinyldichlorsilan und/oder Trimethylchlorsilan aber auch andere Trialkylchlorsilane verwendet, wobei deren Alkylgruppen längerkettig und/oder substituiert sein können.

Die oligomere, mindestens eine SiCl-Gruppe aufweisend Verbindung kann der allgemeinen Formel

Clₐ(R¹)₃₋ₐSi(OSiR¹₂)ₘOSi(R²)_{3-b}Cl_{b} (V) entsprechen,

wobei R² Trimethylsiloxy-, Alkyldimethylsiloxyreste, wobei die Alkylgruppe substituiert sein kann, OR¹ und/oder R¹ darstellt, m Werte zwischen 0 und 1.000 annimmt sowie a und b unabhängig voneinander Werte zwischen 0 und 3 annehmen, mit der Maßgabe, daß (a+b) mindestens 1 ist. Hierbei sind als Reste R¹ Alkylreste, wie Methyl-,Vinyl- oder Ethylgruppen, wobei besonders bevorzugt Methylgruppen sind. Beispielsweise können Bis(trimethylsiloxy)methylchlorsilan oder Tris(trimethylsiloxy)chlorsilan aber auch Tetramethyldichlordisiloxan oder ein lineares Siloxan mit Dimethylchlorsiloxy-Endgruppen eingesetzt werden.

Der Gehalt an siliciumgebundenen Cl-Gruppen im Ausgangsgemisch beträgt vorzugsweise 0,1 bis 5 Gew.-%.

In dem erfindungsgemäßen Verfahren ist keine Dosierung von saurem Katalysator erforderlich. Der für die Hydrolyse bzw. Kondensation benötigte Katalysator bildet sich in-situ mit der Zugabe des Wassers durch die Hydrolyse der SiCl-Gruppen. Da die Konzentration an SiCl-Gruppen im Ausgangsgemisch im Vergleich zu den eingesetzten Mengen an Silanen gering ist, und diese demnach homogen verteilt vorliegen, ist es möglich, durch die Geschwindigkeit der Wasserzugabe die Reaktion kontrolliert ablaufen zu lassen und damit zu steuern.

Als Silan (a) der allgemeinen Formel (I), welches Q-Einheiten bildet, werden vorzugsweise Tetraalkoxysilane, beispielsweise Tetraethoxysilan bzw. dessen handelsübliche Teilhydrolysate, beispielsweise mit einem SiO₂-Gehalt von 40 Gew.-%, verwendet.

Als Silan (b) der allgemeinen Formeln (II) und (III), welche M-Einheiten bilden, werden vorzugsweise Trialkylalkoxysilane, bei denen die Trialkylsilylgruppe beispielsweise eine Trimethyl-, Dimethylvinyl-, Dimethylethyl- und/oder Dimethylhydrogensilylgruppe darstellt, oder deren Hydrolysate, und/oder Hexaalkyldisiloxane oder Vinylalkyldisiloxane eingesetzt.

Das Verhältnis von Silan (a) zu Silan (b), d. h. das Verhältnis Q-Einheiten zu M-Einheiten, ist abhängig von den gewünschten Endprodukten. Üblicherweise liegt es im Bereich von 0,25 bis 2,00.

Difunktionelle (D)- und/oder trifunktionelle (T)-Einheiten können mit dem erfindungsgemäßen Verfahren ebenfalls in das Harz eingebaut werden. Auch hierbei ist Menge und Funktionalität von der späteren Anwendung abhängig. Dabei können Anteile der gewünschten Einheiten schon durch die Auswahl der SiCl-Gruppen aufweisenden Verbindungen in der Reaktionsmischung enthalten sein, beispielsweise, wenn als SiCl-Gruppen aufweisende Verbindungen Methylvinyldichlorsilan (D-Einheit) oder Methyltrichlorsilan (T-Einheit) verwendet werden. Ebenso ist es durch gezielte Auswahl der SiCl-Gruppen aufweisenden Verbindungen möglich, Gruppen in das Harz einzubauen, welche sonst nur über einen zusätzlichen Verfahrensschritt, beispielsweise einer Äquilibrierung, einbaubar sind.

Eine weitere Möglichkeit D- bzw. T-Einheiten in das Harz einzubringen, ist der Zusatz von ausgewählten Silanen zum Ausgangsgemisch. Vorzugsweise wird mindestens ein Silan der allgemeinen Formel

R¹ₓSi(OR)₄₋ₓ (VI),

wobei R¹ und R die oben angegebene Bedeutung aufweisen und x entweder 1 oder 2 ist und/oder dessen Teilhydrolysat, zugegeben, wobei Mengen von 0,01 bis 10 Gew.-% im Ausgangsgemisch bevorzugt sind. Auch hierbei ist es möglich, gezielt fünktionelle Gruppen, wie beispielsweise Vinylgruppen, in das Harz einzubauen. Bevorzugt eingesetzte Verbindungen sind Diorganodialkoxysilane und/oder Organotrialkoxysilane, wobei die Organoreste gesättigte oder ungesättigte, substituierte oder unsubstituierte Reste, wie beispielsweise Methyl-, Ethyl-, Vinyl-, n-Propyl-, i-Butyl-, n-Octan-, Hexadodecyl-, Cyclohexyl-, Cylopentyl-, 3-Aminopropyl-, 3-Methacryloxypropyl-, 3-Glycidoxypropyl-, 3-Mercaptopropyl- oder Tridecafluoroctylreste, sein können.

Die Umsetzung des Silangemisches mit der stöchiometrischen Menge Wasser erfolgt in homogener Phase. Das erhaltene Reaktionsgemisch wird dann durch Zugabe eines Wasserüberschusses und/oder von mit Wasser nicht mischbaren Lösemittel in zwei Phasen getrennt, eine wäßrig-alkoholische Phase und eine das Harz enthaltende Phase.

Die Phasentrennung ist vollkommen unkritisch. So kann allein durch Wasserzugabe die Trennung in zwei Phasen erreicht werden. Es ist auch möglich, Wasser und geringe Mengen an mit Wasser nicht mischbaren Lösemittel zuzugeben. Oder, es erfolgt zuerst die Zugabe von Lösemittel und dann wird Wasser zugesetzt.

Das Harz kann somit nach Abtrennung der wäßrig-alkohlischen Phase entweder ohne Lösemittel oder in Form einer Lösung vorliegen.

Das ohne Lösemittel vorliegende Polyorganosiloxanharz kann nun ebenfalls in einem Lösemittel gelöst und entweder, vorzugsweise, enthaltenes Wasser, üblicherweise durch Azeotropdestillation, und Feststoff, üblicherweise durch Filtration oder Zentrifugieren, entfernt werden, wobei eine anwendungsbereite Harzlösung erhalten wird, oder es erfolgt in einer weiteren Stufe analog dem in Lösung vorliegenden Harz eine Kondensation.

Als Lösemittel werden beispielsweise Aromaten, wie Toluol und/oder Xylol, oder aliphatische Kohlenwasserstoffe wie Hexan und/oder Heptan verwendet. In jedem Fall ist es günstig, ein Lösemittel zu wählen, welches mit Wasser ein Azeotrop bildet, um die Entfernung von Wasser aus dem Harz zu ermöglichen.

Das in Form einer organischen Lösung vorliegende Polyorganosiloxanharz wird in einer 3. Stufe
durch Zusatz einer basisch reagierenden Verbindung auf einen pH-Wert größer 7 eingestellt und unter Abtrennung eines Alkohol/Wasser/Lösemittel-Gemisches kondensiert, dann das erhaltene Produkt
in einer 4. Stufe
durch Zugabe einer Säure und/oder Säure abspaltenden Verbindung neutralisiert, anschließend ggf. noch enthaltenes Wasser und ein Teil des Lösemittels entfernt sowie unlösliche Bestandteile abgetrennt.

Die Kondensation wird bevorzugt im pH-Beich von 8 bis 10 und bei Rückflußtemperaturen, beispielsweise im Bereich zwischen 100 und 160 °C, durchgeführt. Als Katalysatoren können alle für diese Reaktion bekannten Verbindungen eingesetzt werden, bevorzugt sind Alkalihydroxide, wie Natrium- oder Kaliumhydroxid, oder Amine, wie Methylamin, Ethylamin, Ammoniumverbindungen oder Hexaalkyldisilazane. Zur Neutralisation wird üblicherweise Salzsäure verwendet. Vorteilhafterweise wird nach der Neutralisation nochmals azeotrop Wasser entfernt und unlösliche Bestandteile, meist durch die Neutralisation gebildeten Salze, entfernt. Abschließend kann die Harzlösung mit Lösemittel auf die gewünschte Konzentration eingestellt werden und ist damit anwendungsbereit.

Eine Möglichkeit der Verwendung des erfindungsgemäß hergestellten Polyorganosiloxanharzes nach Abschluß der Kondensation ist das Abmischen mit einem flüssigen Polyorganosiloxan. Dazu wird die nach der 4. Stufe erhaltene Polyorganosiloxanharzlösung
in einer 5. Stufe
mit mindestens einer siliciumorganischen Verbindung der allgemeinen Formel

R¹ R³ R⁴SiO-(R¹₂SiO)ₙ-Si R¹ R³R⁴ (VII) und/oder

mit mindestens einer siliciumorganischen Verbindung der allgemeinen Formel

(R¹₂SiO)ₚ (VIII),

wobei R³ und R⁴ unabhängig voneinander OH oder OR oder R¹ sind und R¹ die oben angegebene Bedeutung aufweist, n Werte zwischen 0 und 5000 und p Werte zwischen 3 und 8 annehmen, vermischt und anschließend das Lösemittel vollständig entfernt.

Vorzugsweise werden siliciumorganische Verbindungen eingesetzt, welche eine Viskosität zwischen 10 und 100.000 mPas aufweisen. Die Verbindungen können als vernetzungsfähige Gruppen am Silicium beispielsweise Vinyl-, OH-, Methoxy-, Ethoxy- und/oder Acetoxyreste oder Wasserstoff enthalten.

Im folgenden soll die Erfindung beispielhaft an einer bevorzugten Ausführungsform beschrieben werden:
In der 1. Stufe werden die Ausgangstoffe, beispielsweise Tetraalkylsilikat, Hexaalkyldisiloxane und SiCl-Gruppen aufweisende Verbindungen, wie Trimethylchlorsilan, und ggf. weitere Alkoxysilane im gewünschten Verhältnis vermischt. Anschließend wird die zur Hydrolyse aller SiOR- bzw. SiCl-Bindungen notwendige Menge Wasser unter Rühren langsam zu der Mischung dosiert. Die Reaktionstemperatur sollte 50 bis 70 °C betragen. Es wird ein homogenes Gemisch erhalten. Nach Beendigung der Wasserzugabe wird zur Vervollständigung der Reaktion noch ca. 2 Stunden am Rückfluß erhitzt. Es ist auch möglich, unter Druck zu arbeiten.

Es ist nun möglich, in der 2. Stufe das erhaltene homogene Reaktionsgemisch durch Wasserzugabe in zwei Phasen zu trennen und die wäßrig-alkoholische Phase abzutrennen. Das hat den Vorteil, daß das Volumen der Mischung bei der Phasentrennung gering ist, außerdem enthält die wäßrige Phase kein organisches Lösemittel und damit weniger gelöste siliciumorganische Verbindungen. Die nach der Abtrennung der wäßrigen Phase verbleibende Harzphase wird in mit Wasser nicht mischbarem Lösemittel, beispielsweise Toluol, gelöst und kann nun entweder, wie weiter unten unter (a) beschrieben, nach Entfernung von Wasser und Feststoffen sofort eingesetzt werden (das Harz enthält 1,5 bis 5 Gew.-% siliciumgebundene OH-Gruppen und 2 bis 5 Gew.-% siliciumgebundene OR-Gruppen) oder, wie unter (b) beschrieben, kondensiert werden.

In der 2. Stufe ist es zur Abtrennung des freigesetzten Alkohols aus der homogenen Mischung weiterhin möglich, unter Rühren zuerst mit Wasser nicht mischbares Lösemittel, wie Toluol, und dann Wasser zuzugegeben. Die Menge an Lösemittel bzw. an Wasser beträgt üblicherweise 20 bis 120 Gew.-%, bezogen auf das homogene Reaktionsgemisch nach der Umsetzung. Das Gemisch trennt sich in eine wäßrig-ethanolische Phase und eine organische Phase. Durch gezielte Wasser- bzw. Lösemittelzugabe ist es möglich, die Dichten der Phasen so zu variieren, daß die wäßrige Phase entweder als obere oder als untere Phase vorliegt. Die erhaltene Harzphase kann auf verschiedene Weise weiter verarbeitet werden.
(a) Aus der Harzphase wird Wasser durch Azeotropdestillation entfernt, dabei gleichzeitig die gewünschten Endkonzentration eingestellt, anschließend erfolgt eine Filtration. Erhalten wird ein Polyorganosiloxan mit 1,5 bis 5 Gew.-% siliciumgebundenen OH-Gruppen und 2 bis 5 Gew.-% siliciumgebundenen OR-Gruppen, welches als klare Lösung vorliegt.
(b) In der 3. Stufe kann eine Kondensation des Harzes mit dem Ziel der Reduzierung des Gehaltes an OH- und OR-Gruppen erfolgen. Hierzu wird die Harzphase durch Zugabe von Natron- oder Kalilauge auf einen pH-Wert zwischen 8 und 10 eingestellt und Lösemittel bis zum Erreichen einer Harzkonzentration von 60 bis 95 Gew.-% entfernt. Anschließend werden mittels eines Wasserabscheiders innerhalb mehrerer Stunden bei Sumpftemperaturen oberhalb 100 °C, bevorzugt sind 120 bis 160 °C, Kondensationswasser, Alkohol und Lösemittel abgetrennt.

Danach wird in der 4. Stufe unter Rühren durch portionsweise Zugabe von Salzsäure, wobei die Konzentration der Salzsäure beliebig gewählt werden kann, neutralisiert und nochmals 1 bis 2 Stunden zur Abtrennung von Wasser und Alkohol am Wasserabscheider erhitzt. Anschließend werden aus der erhaltenen Harzlösung die unlöslichen Bestandteile, wie beispielsweise die durch die Neutralisation gebildeten Salze, durch Filtration oder Zentrifugieren, abgetrennt. Das erhaltene Polyorganosiloxanharz weist weniger als 1 Gew.-% siliciumgebundene OH-Gruppen weniger als 2 Gew.-% siliciumgebundene OR-Gruppen auf und liegt als klare Lösung vor. Es ist weiterhin vollständig löslich in siliciumorganischen Polymeren und anderen organischen Lösemitteln, wie beispielsweise in Aceton, Benzinen, Aromaten oder Alkoholen.

Mit der erfindungsgemäß hergestellten Polyorganosiloxanharzlösung kann nun auf verschiedene Weise weiter verfahren werden. Eine Variante besteht darin, die Harzlösung auf eine anwendungsfertige Konzentration mit dem entsprechenden Lösemittel einzustellen. Eine weitere Variante ist die vollständige Entfernung des Lösemittels, wobei ein, in Abhängigkeit vom M/Q-Verhältnis bei Raumtemperatur flüssiges bis festes, lösemittelfreies Harz erhalten wird. Weiterhin kann die Harzlösung in einer 5. Stufe mit einem Polyorganosiloxan vermischt und eventuell noch enthaltenes Lösemittel abgetrennt werden. Als Polyorganosiloxan kann beispielsweise ein lineares Polydimethylsiloxan mit Vinyl-, OH- oder OR-Endgruppen einer Viskosität zwischen 10 und 100.000 mPas oder mit einer cyclischen silicumorganischen Verbindung, die aus [(CH₃)₂SiO]ₚ-Einheiten besteht, wobei p Werte zwischen 3 und 8, vorzugsweise zwischen 4 und 6, annimmt, verwendet werden.

Der Vorteil des erfindungsgemäßen Verfahrens besteht vor allem darin, während der Hydrolyse-/ Kondensationsreaktionen partiell hohe Katalysatorkonzentrationen an der Dosierstelle zu vermeiden. Durch die Verwendung von SiCl-Gruppen aufweisenden Verbindungen, welche in der gesamten Ausgangsmischung verteilt vorliegen, gelingt es, an der Wasser-Dosierstelle eine äußerst niedrige Säurekonzentration zu erreichen. Dadurch ist es möglich, sowohl den Anteil an niedermolekularen Siloxanen gering zu halten, als auch eine enge Molmassenverteilung im Endprodukt zu erzielen und die Anteile an höhermolekularen bzw. unlöslichen Nebenprodukten zu reduzieren.

Die erfindungsgemäßen Polyorganosiloxane können u. a. als transparente Verstärker in Kautschuken, in Entschäumerformulierungen, als Additive in Beschichtungsmitteln, zur Herstellung von Papierimprägniermitteln und zur Herstellung von druckempfindlichen Siliconklebstoffen verwendet werden.

### Ausführungsbeispiele

### Beispiel 1

Zu einer Mischung aus 362 g (1,74 mol) Tetraethoxysilan, 127 g (0,78 mol) Hexamethyldisiloxan und 19 g (0,18 mol) Trimethylchlorsilan wurden innerhalb von 3 Stunden 130 g Wasser bei einer Sumpftemperatur von 70 °C dosiert. Danach wurde 2 Stunden am Rückfluß gekocht. Anschließend wurden unter Rühren 100 g Toluol und 70 g Wasser zugegeben und die obere wäßrige Phase (450 g, 1,3 Gew.-% Chlorwasserstoff, Dichte: 0,88 g/cm³) abgetrennt. Von der toluolischen Harzlösung (Dichte: 1,00 g/cm³) wurden 70 g Destillat abgenommen und anschließend filtriert. Es wurden 287 g einer Harzlösung mit einem Gehalt von 80 Gew.-% Siloxan erhalten. Die Ausbeute betrug 93 %. Das Harz enthielt 1,4 Gew.-% siliciumgebundene OH- sowie 2,5 Gew.-% siliciumgebundene EtO-Gruppen. Die mit Gelpermeationschromatografie (GPC) gemessenen Werte des Molekulargewichts (Polystyrolstandards) betrugen für Mw 2000 g/mol und für Mn 1516 g/mol.

### Beispiel 2

Zu einer Mischung aus 362 g (1,74 mol) Tetraethoxysilan, 185 g (1,57 mol) Trimethylethoxysilan und 19 g (0,18mol) Trimethylchlorsilan wurden bei einer Sumpftemperatur von 70 °C innerhalb von 1 Stunde 130 g Wasser dosiert. Danach wurde 3 h am Rückfluß gekocht. Anschließend wurden unter Rühren 100 g Toluol und 70 g Wasser zugegeben und die obere wäßrige Phase (500 g, 1,3 Gew.-% Chlorwasserstoff, Dichte 0,89 g/cm³) abgetrennt. Von der toluolischen Harzlösung wurden 80 g Destillat abgenommen und anschließend filtriert. Es wurden 273 g einer Harzlösung mit einem Gehalt von 80 Gew.-% Siloxan erhalten. Die Ausbeute betrug 88 %. Das Harz enthielt 1,2 Gew.-% siliciumgebundene OH- sowie 2,6 Gew.-% siliciumgebundene EtO-Gruppen. Die mit Gelpermeationschromatografie (GPC) gemessenen Werte des Molekulargewichts (Polystyrolstandards) betrugen für Mw 1618 g/mol und für Mn 1371 g/mol.

### Beispiel 3

Zu einer Mischung aus 90 kg (0,43 kmol) Tetraethoxysilan, 26,1 kg (0,16 kmol) Hexamethyldisiloxan und 5 kg (0,05 mol) Trimethylchlorsilan wurden bei einer Sumpftemperatur von 70 °C unter Rühren innerhalb von 2 Stunden 32 kg Wasser dosiert. Danach wurde 2 Stunden am Rückfluß gekocht und anschließend unter Rühren 110 kg Toluol und 190 kg Wasser zugegeben. Die untere wäßrige Phase (280 kg, 0,7 Gew.-% Chlorwasserstoff, Dichte: 0,97 g/cm³) wurde abgetrennt und dann von der zurückbleibenden toluolischen Harzphase 90 kg Destillat abgenommen. Nach Filtration wurden 66 kg einer Harzlösung mit einem Gehalt von 73 Gew.-% Siloxan erhalten. Die Ausbeute betrug 86%. Das Harz enthielt 1,7 Gew.-% siliciumgebundene OH- sowie 2,6 Gew.-% siliciumgebundene EtO-Gruppen. Die mit Gelpermeationschromatografie (GPC) gemessenen Werte des Molekulargewichts (Polystyrolstandards) betrugen für Mw 1550 g/mol und für Mn 1234 g/mol.

### Beispiel 4

Zu einer Mischung aus 354 g (1,7 mol) Tetraethoxysilan, 17,4 g (0,09 mol) 1,3-Divinyltetramethyldilsiloxan, 111 g ( 0,69 mol) Hexamethyldisiloxan und 19 g (0,18 mol) Trimethylchlorsilan wurden unter Rühren bei einer Sumpftemperatur von 70°C innerhalb von 1 Stunde 125 g Wasser dosiert. Danach wurde 2 Stunden am Rückfluß gekocht. Anschließend wurden unter Rühren 400 g Toluol und 625 g Wasser zugegeben und die untere wäßrige Phase (965 g, 0,6 Gew.-% Chlorwasserstoff Dichte: 0,96 g/cm³) abgetrennt. Zu 620 g der toluolischen Harzlösung (Dichte: 0,94 g/cm³) wurden anschließend 0,5 g 25 %-ige Natronlauge gegeben und innerhalb von 1 Stunde 185 g Destillat abgenommen. Anschließend wurde noch 1 Stunde bei einer Sumpftemperatur von 120 °C am Wasserabscheider gekocht, wobei 15 g Destillat anfielen. Dann wurde portionsweise mit 20 %-iger Salzsäure neutralisiert und über den Wasserabscheider nochmals 20 g Destillat abgenommen. Nach der Filtration wurden 400 g einer toluolischen Harzlösung mit einem Siloxangehaltgehalt von 60 Gew.-% erhalten. Die Ausbeute betrug 95%. Das Harz enthielt 1,0 Gew.% siliciumgebundene OH-, 2,0 Gew.-% siliciumgebundene EtO-Gruppen und wies 1,75 Gew.-% Vinylgruppen auf. Die mit Gelpermeationschromatografie (GPC) gemessenen Werte des Molekulargewichtes (Polystyrolstandards) betrugen für Mw 1681 g/mol und für Mn 1380 g/mol.

### Vergleichsbeispiel 5

Zu einer Mischung aus 354 g (1,7 mol) Tetraethoxysilan, 15,8g (0,08 mol) 1,3-Divinyltetramethyldilsiloxan, 125,3 g (0,77 mol) Hexamethyldisiloxan und 32,4 g 20 %-iger Salzsäure (entspricht 0,18 mol Chlorwasserstoff) wurden unter Rühren bei einer Sumpftemperatur von 70 °C innerhalb von 1 Stunde 123g Wasser dosiert. Danach wurde 2 Stunden am Rückfluß gekocht. Anschließend wurden unter Rühren 450 g Toluol und 680 g Wasser zugegeben und die untere wäßrige Phase (1130 g, 0,6 Gew.-% Chlorwasserstoff) abgetrennt. Die obere (538 g), sehr trübe organische Phase hatte nach Filtration eine Konzentration von 23 Gew.-% Siloxan. Nach Abnahme von 358 g Destillat wurden 170 g einer Harzlösung mit 75Gew.-% Siloxan erhalten. Die Ausbeute betrug 50%. Das Harz enthielt 1,2 Gew.-% siliciumgebundene OH- sowie 2,6 Gew.-% siliciumgebundene EtO-Gruppen. Die mit Gelpermeationschromatografie (GPC) gemessenen Werte des Molekulargewichtes (Polystyrolstandards) betrugen für Mw 1240 g/mol und für Mn 1070 g/mol.

### Beispiel 6

Zu einer Mischung aus 253 g (0,34 mol ) eines Teilhydrolysates von Tetraethoxysilan mit einem SiO₂-Gehalt von 40 Gew.-%, 15,8 g (0,08 mol) 1,3-Divinyltetramethyldilsiloxan, 111 g (0,69mol) Hexamethyldisiloxan und 19 g (0,18 mol) Trimethylchlorsilan wurden unter Rühren bei einer Sumpftemperatur von 70°C innerhalb von 1 Stunde 70 g Wasser dosiert. Danach wurde 2 Stunden am Rückfluß gekocht. Anschließend wurden unter Rühren 450 g Toluol und 730 g Wasser zugegeben und 1490 g wäßrige Phase abgetrennt. Zu 745 g toluolischer Harzlösung wurden danach 0,7 g 25 %-ige Natronlauge gegeben und innerhalb von 2 Stunden 280 g Destillat abgenommen. Anschließend wurde 1 Stunde bis zu einer max. Sumpftemperatur von 120 °C am Wasserabscheider gekocht, wobei 20 g Destillat anfielen. Dann wurde portionsweise mit 20 %-iger Salzsäure neutralisiert und innerhalb von 30 min bei einer Sumpftemperatur von 120 °C 20 g Destillat abgenommen. Nach der Filtration wurden 350 g einer toluolischen Harzlösung mit einem Siloxangehalt von 60 Gew.-% erhalten. Die Ausbeute betrug 90 %. Das Harz enthielt 1,7 Gew.-% siliciumgebundene OH- sowie 3,0 Gew.-% siliciumgebundene EtO-Gruppen. Die mit Gelpermeationschromatografie (GPC) gemessenen Werte des Molekulargewichts (Polystyrolstandards) betrugen für Mw 2326 g/mol und für Mn 1488 g/mol.

### Beispiel 7

Zu einer Mischung aus 354 g (1,7 mol) Tetraethoxysilan, 17,4g (0,09 mol) 1,3-Divinyltetramethyldilsiloxan, 111 g ( 0,69 mol) Hexamethyldisiloxan und 19 g (0,18 mol) Trimethylchlorsilan wurden unter Rühren bei einer Sumpftemperatur von 70 °C innerhalb von 1 Stunde 123 g Wasser dosiert. Danach wurde 1 Stunde am Rückfluß gekocht. Anschließend wurden unter Rühren 450 g Xylol und 670 g Wasser zugegeben und 1030 g der unteren wäßrigen Phase (Dichte 0,97 g/cm³) abgetrennt. Zu 710 g xylolischer Harzlösung (32 Gew.% Siloxan) wurden anschließend 0,97 g 25 %-ige Natronlauge gegeben und innerhalb von 1 Stunde 367 g Destillat abgenommen. Anschließend wurde bis zu einer max. Sumpftemperatur von 140 °C am Wasserabscheider gekocht, wobei 20 g Destillat anfielen, und anschließend portionsweise mit 20 %-iger Salzsäure neutralisiert und nochmals 20 g Destillat abgenommen. Nach der Filtration wurden 325 g einer Harzlösung in Xylol mit einem Siloxangehalt von 70 Gew. -% erhalten. Die Ausbeute betrug 94 %. Das Harz enthielt 0,52 Gew.-% siliciumgebundene OH- sowie 2,0 Gew.-% siliciumgebundene EtO-Gruppen. Die mit Gelpermeationschromatografie (GPC) gemessenen Werte des Molekulargewichts (Polystyrolstandards) betrugen für Mw 2909 g/mol und für Mn 2367 g/mol.

### Beispiel 8

Zu einer Mischung aus 784 g (3,8 mol) Tetraethoxysilan, 31,3g (0,168 mol) 1,3-Divinyltetramethyldilsiloxan, 154 g ( 0,95 mol) Hexamethyldisiloxan und 39 g (0,36 mol) Trimethylchlorsilan wurden unter Rühren bei einer Sumpftemperatur von 70 °C innerhalb von 1 Stunde 280 g Wasser dosiert. Danach wurde 2 Stunde am Rückfluß gekocht. Anschließend wurden unter Rühren 900 g Wasser zugegeben und 1625 g obere wäßrigen Phase (Dichte 0,95 g/cm³) abgetrennt. Die Harzphase wurde anschließend in 450 g Xylol gelöst, mit 2,6 g 25%-iger Natronlauge alkalisch gemacht und innerhalb von 1 Stunde 363 g Destillat abgenommen. Anschließend wurde 4 h bis zu einer max. Sumpftemperatur von 142 °C am Wasserabscheider gekocht, wobei 10 g Destillat anfielen, und anschließend portionsweise mit 20 %-iger Salzsäure neutralisiert und nochmals 10 g Destillat abgenommen. Nach der Filtration wurden 527 g einer Harzlösung in Xylol mit einem Siloxangehalt von 70 Gew.-% erhalten. Die Ausbeute betrug 83 %. Das Harz enthielt 0,49 Gew.-% siliciumgebundene OH- sowie 2,0 Gew.-% siliciumgebundene EtO-Gruppen. Die mit Gelpermeationschromatografie (GPC) gemessenen Werte des Molekulargewichts (Polystyrolstandards) betrugen für Mw 4100 g/mol und für Mn 3367 g/mol.

### Beispiel 9

Zu einer Mischung aus 90 kg (0,43 kmol) Tetraethoxysilan, 4,3 kg (0,02 kmol) 1,3-Divinyltetramethyldilsiloxan, 22,3 kg (0,14 kmol) Hexamethyldisiloxan und 5 kg (0,05 kmol) Trimethylchlorsilan wurden unter Rühren innerhalb von 2 Stunden 32 kg Wasser dosiert. Danach wurde 2 Stunden am Rückfluß gekocht. Anschließend wurden unter Rühren 110 kg Toluol und 190 kg Wasser zugegeben und die untere wäßrige Phase (280 kg, 0,6 Gew.-% Chlorwasserstoff, Dichte: 0,96 g/cm³) abgetrennt. Zur toluolischen Harzlösung (Dichte: 0,94 g/cm³) wurden anschließend 0,24 kg 21%-ige Natronlauge gegeben, innerhalb von 2 Stunden 83,1 kg Destillat abgenommen und anschließend 2 Stunden bei dieser Temperatur am Wasserabscheider unter Abtrennung von 0,1 kg Destillat gekocht. Dann wurde mit 0,145 kg 32 %-iger Salzsäure portionsweise neutralisiert und durch Rückflußkochen am Wasserabscheider nochmals ca. 0,1 kg Destillat abgetrennt. Nach der Filtration wurden 91 kg einer toluolischen Harzlösung mit einem Siloxangehalt von 67 Gew.-% und einer Viskosität von 7 mPas bei 25°C erhalten. Die Ausbeute betrug 91 %. Das Harz enthielt 0,9 Gew.-% siliciumgebundene OH- sowie 1,8 Gew.-% siliciumgebundene EtO-Gruppen und hatte einen Vinylgehalt von 2 Gew.-%. Die mit Gelpermeationschromatografie (GPC) gemessenen Werte des Molekulargewichts (Polystyrolstandards) betrugen für Mw 2240 g/mol und für Mn 1788 g/mol.

### Beispiel 10

Herstellung einer Mischung aus 25 Gew.-% Polyorganosiloxanharz aus Beispiel 9 und 75 Gew.-% eines Polydimethylsiloxans mit Vinyldimethysiloxyendgruppen

100 g der im Beispiel 9 erhaltenen 67 %-igen QMM^{V}-Harzlösung in Toluol wurde mit 200 g eines Polydimethylsiloxans mit Vinyldimethysiloxyendgruppen einer Viskosität von 10.000 mPas (Vinyl-Gehalt: 0,16 Gew.-%) gemischt und die flüchtigen Bestandteile durch eine 1-stündige Vakuumbehandlung im Rotationsverdampfer bei einem minimalen Unterdruck von 0,5 mbar und einer max. Sumpftemperatur von 190 °C entfernt. Die erhaltene Polymermischung (267 g) mit einen Polyorganosiloxan-Harz-Gehalt von 25 Gew.-% hatte eine Viskosität bei 25 °C von 7.000 mPas.

### Beispiel 11

Eine gemäß Beispiel 10 hergestellte QMM^{V}-Harz/Vinylpolymermischung wurde zur Herstellung von durch Addition vernetzenden RTV2 Kautschuk eingesetzt und die mechanischen Kennwerte bestimmt.

Tabelle 1 enthält Rezepturen und Kennwerte der erhaltenen RTV2-Add Kautschukmischungen.

**Tabelle 1**

| **Einsatzstoffe** | **Gewichts -Teile** | | | |
|---|---|---|---|---|
| | **Rezeptur 1** | **Rezeptur 2** Vergleichsbeispiel zu Rezeptur 1 | **Rezeptur 3** | **Rezeptur 4** Vergleichsbeispiel zu Rezeptur 3 |
| Vinyl-endgestopptes Polydimethylsiloxan, Viskosität 10.000 mPas | 75 | 100 | 64 | 70 |
| Fumed Silica | 0 | 0 | 21 | 21 |
| QMM^{V} - Harz | 25 | 0 | 6 | 0 |
| Pt-Katalysator, 1%-ig | 0,2 | 0,2 | 0,1 | 0,1 |
| Inhibitor | 0,06 | 0,06 | 0,06 | 0,06 |
| H-funktionelles Polydimethylsiloxan Typ M₂DₓD^{H}_{y}, aktiver H-Gehalt 4,3 mmol/g | 5 | 5 | 4 | 4 |
| Viskosität mPas | 6.500 | 9.500 | 47.000 | 44.000 |

| **Mechanische Vulkanisatkennwerte** | | | | |
|---|---|---|---|---|
| Zugfestigkeit [MPa] | 4,4 | 0,6 | 6,0 | 4,4 |
| Reißdehnung [%] | 190 | 160 | 300 | 300 |
| Härte [ShA] | 32 | 22 | 42 | 35 |
| Weiterreißwiderstand [N/mm] | n. b. | n.b. | 22 | 12 |
| n.b.= Wert wurde nicht bestimmt | | | | |

Die Verbesserung der mechanischen Vulkanisatkennwerte der, die erfindungsgemäß hergestellten Polyorganosiloxanharze enthaltenden Mischungen, gegenüber den herkömmlich, hergestellten ist aus Tabelle 1 ersichtlich.

### Beispiel 12

Zu einer Mischung aus 318 g (1,53mol) Tetraethoxysilan, 16,7g (0,09 mol) 1,3-Divinyltetramethyldilsiloxan, 111,8 g (0,69 mol) Hexamethyldisiloxan, 19,8 g (0,034 mol) Tridecafluoroctyltriethoxysilan und 16,2 g (0,15 mol) Trimethylchlorsilan wurden unter Rühren bei einer Sumpftemperatur von 70 °C innerhalb von 1 Stunde 115 g Wasser dosiert. Danach wurde 1 Stunde am Rückfluß gekocht. Anschließend wurden unter Rühren 450 g Toluol und 685 g Wasser zugegeben und 976 g der unteren wäßrigen Phase abgetrennt. Von der verbliebenen organischen Phase wurden 390 g Destillat abgenommen. Nach der Filtration wurden 300 g einer klaren Harzlösung in Toluol mit einem Gehalt an Siloxan von 72 Gew.-% erhalten. Zu 155 g der Harzlösung wurden anschließend 0,45 g 25 %-ige Natronlauge gegeben und innerhalb von 2 Stunden bei einer max. Sumpftemperatur von 120 °C am Wasserabscheider gekocht, wobei 20 g Destillat anfielen. Danach wurde portionsweise mit 20 %-iger Salzsäure neutralisiert und nochmals 5 g Destillat abgenommen. Nach der Filtration wurden 130 g einer 70 %-ige Harzlösung erhalten. Die Ausbeute betrug 94 %. Das Harz enthielt 0,73 Gew.-% siliciumgebundene OH- sowie 2 Gew.-% siliciumgebundene EtO-Gruppen. Die mit Gelpermeationschromatografie (GPC) gemessenen Werte des Molekulargewichts (Polystyrolstandards) betrugen für Mw 2124 g/mol und für Mn 1600 g/mol.

### Beispiel 13

Ein gemäß Beispiel 12 hergestelltes QM-Harzes, welches Tridecafluoroctylgruppen aufweist, wurde zur Herstellung von durch Kondensation vernetzenden RTV2 Kautschuken eingesetzt. Die Komponente 1 wurde im Pressmixer hergestellt, dann mit Komponente 2 rückverdünnt und anschließend der Vernetzer zugesetzt. Am erhaltenen Produkt wurden die mechanischen Kennwerte bestimmt.

Tabelle 2 enthält Rezepturen und Kennwerte der erhaltenen RTV2-Kond Kautschukmischungen.

**Tabelle 2**

| **Einsatzstoffe** | **Gewichts -Teile** | |
|---|---|---|
| | **Rezeptur 1** | **Rezeptur 2** Vergleichsbeispiel zu Rezeptur 1 |
| Komponente 1 | | |
| α,ω Dihydroxyolydimethylsiloxan, Viskosität 5000 mPas | 35 | 45 |
| QM-Harz mit Tridecafluoroctylgruppen nach Beispiel 12 hergestellt | 10 | - |
| Cabosil M 7 D | 30 | 30 |
| Hexamethyldisilazan | 8 | 8 |
| Wasser | 2 | 2 |

| Komponente 2 | | |
|---|---|---|
| α,ω Dihydroxyolydimethylsiloxan, Viskosität 5000 mPas | 35 | 35 |
| Polydimethylsiloxan, Viskosität 100 mPas | 20 | 20 |
| Vernetzer | | |
| 5 Gew.-% Dibutylzinndilaurat | 7 | 7 |
| 95 Gew. %Tetraethoxysilan | | |
| Viskosität [mPas] | 35 | 40 |

| **Mechanische Vulkanisatkennwerte** | | |
|---|---|---|
| Fließzeit [min] | 20 | 22 |
| Zugfestigkeit [MPa] | 4,7 | 5,4 |
| Dehnung [%] | 450 | 380 |
| Härte [Sh A] | 25 | 31 |
| Weiterreißwiderstand [N/mm] | 26 | 26 |

Der Zusatz des erfindungsgemäß hergestelleten Polyorganosiloxanharzes verbessert sowohl die Verarbeitungseigenschaften der Mischung als auch die mechanischen Kennwerte im Silicongummi, insbesondere weisen die erhaltenen Produkte eine kürzere Fließzeit und eine geringere Viskosität als die nach der herkömmlichen Rezeptur hergestellten auf.

### Beispiel 14

Zu einer Mischung aus 354 g (1,7 mol) Tetraethoxysilan, 95 g (0,58 mol) Hexamethyldisiloxan und 36 g (0,26 mol) Methylvinyldichlorsilan wurden unter Rühren bei einer Sumpftemperatur von 70 °C innerhalb von 1 Stunde 132 g Wasser dosiert. Danach wurde 2 Stunden am Rückfluß gekocht. Anschließend wurden unter Rühren 450 g Toluol und 670 g Wasser zugegeben und die untere wäßrige Phase (1040 g, 1,6 Gew.-% Chlorwasserstoff, Dichte 0,97g/cm³) abgetrennt. Zu 426 g toluolischer Harzlösung wurden anschließend 0,5 g 25 %-ige Natronlauge gegeben und innerhalb von 1 Stunde 205 g Destillat abgenommen. Anschließend wurde noch 1 Stunde bei 120°C Sumpftemperatur am Wasserabscheider gekocht (10 g Destillat). Dann wurde portionsweise mit 20 %-iger Salzsäure neutralisiert und über den Wasserabscheider nochmals 10 g Destillat abgenommen. Nach Filtration wurden 160 g einer toluolischen Harzlösung mit einem Siloxangehaltgehalt von 70 % erhalten. Die Ausbeute betrug 93 %. Das Harz enthielt 0,51 Gew.-% siliciumgebundene OH- sowie 2,95 Gew.-% siliciumgebundene EtO-Gruppen und 3,7 Gew.-% Vinyl-Gruppen. Die mit Gelpermeationschromatografie (GPC) gemessenen Werte des Molekulargewichtes (Polystyrolstandards) betrugen für Mw 5525 g/mol und für Mn 2515 g/mol.

### Beispiel 15

Zu einer Mischung aus 354 g (1,7 mol) Tetraethoxysilan, 17,4 g (0,09 mol) 1,3-Divinyltetramethyldilsiloxan, 125,3 g ( 0,77 mol) Hexamethyldisiloxan und 8 g (0,047 mol) Tetrachlorsilan wurden unter Rühren bei einer Sumpftemperatur von 70°C innerhalb von 1 Stunde 126 g Wasser dosiert. Danach wurde 2 Stunden am Rückfluß gekocht. Anschließend wurden unter Rühren 450 g Toluol und 675 g Wasser zugegeben und die untere wäßrige Phase (990g g, 0,6 Gew.-% Chlorwasserstoff, Dichte: 0,96 g/cm³) abgetrennt. Von 677 g toluolischer Harzphase wurden 386 g Destillat abgenommen. Nach Filtration wurden 290 g Harzlösung mit einem Siloxangehalt von 72 Gew.-% erhalten. Die Ausbeute betrug 87 %. Das Harz enthielt 2,0 Gew.-% siliciumgebundene OH-, 3,5 Gew.-% siliciumgebundene EtO-Gruppen und 1,8 Gew.-% Vinyl-Gruppen. Die mit Gelpermeationschromatografie (GPC) gemessenen Werte des Molekulargewichtes (Polystyrolstandards) betrugen für Mw 1246 g/mol und für Mn 912 g/mol.

## Patentansprüche

1. Verfahren zur Herstellung von Polyorganosiloxanharzen, die mono- und tetrafunktionelle Einheiten enthalten, dadurch gekennzeichnet, daß
in einer 1. Stufe
ein Gemisch aus
(a) mindestens einem Silan der allgemeinen Formel
Si(OR)₄ (I),
wobei R gleich oder verschieden sein kann und einen einwertigen Alkylrest mit 1 bis 4 Kohlenstoffatomen darstellt, oder dessen Teilhydrolysat,
(b) mindestens einem Silan der allgemeinen Formel
R¹₃SiOR (II),
und/oder dessen Hydrolysat der allgemeinen Formel
R¹₃SiOSi R¹₃ (III),
wobei R die oben genannte Bedeutung aufweist und R¹ gleich oder verschieden sein kann und Wasserstoff verzweigte und/oder unverzweigte, gesättigte und/oder ungesättigte, substituierte und/oder unsubstituierte, lineare, cyclische, aliphatische und/oder aromatische Kohlenwasserstoffreste mit 1 bis 18 Kohlenstoffatomen bedeutet,
(c) und mindestens einer monomeren und/oder oligomeren Verbindung, welche mindestens eine SiCl-Gruppe aufweist,
mit der hinsichtlich der hydrolysierbaren Gruppen äquivalenten Menge Wasser umgesetzt und anschließend aus dem erhaltenen homogenen Reaktionsgemisch
in einer 2. Stufe
nach Zugabe von Wasser und/oder mit Wasser nicht mischbaren Lösemittel eine wäßrig-alkoholische Phase abgetrennt wird.

2. Verfahren nach Anspruch 1, dadurch gekennzeichnet, daß die monomere, mindestens eine SiCl-Gruppe aufweisende Verbindung der allgemeinen Formel
R¹_{y}SiCl_{4-y} (IV) entspricht,
wobei R¹ die oben angegebene Bedeutung aufweist und y Werte zwischen 0 und 3 annimmt.

3. Verfahren nach Anspruch 2, dadurch gekennzeichnet, daß die Verbindung der allgemeinen Formel (IV) ein Trialkylchlorsilan und/oder Siliciumtetrachlorid ist.

4. Verfahren nach Anspruch 2, dadurch gekennzeichnet, daß die Verbindung der allgemeinen Formel (IV) Methylvinyldichlorsilan ist.

5. Verfahren nach Anspruch 1, dadurch gekennzeichnet, daß die oligomere, mindestens eine SiCl-Gruppe aufweisend Verbindung der allgemeinen Formel
Clₐ(R¹)₃₋ₐSi(OSiR¹₂)ₘOSi(R^{²})_{3-b}Cl_{b} (V) entspricht,
wobei R² Trimethylsiloxy-, Alkyldimethylsiloxyreste, wobei die Alkylgruppe substituiert sein kann, OR¹ und/oder R¹ darstellt, m Werte zwischen 0 und 1.000 annimmt sowie a und b unabhängig voneinander Werte zwischen 0 und 3 annehmen, mit der Maßgabe, daß (a+b) mindestens 1 ist.

6. Verfahren nach Anspruch 1, dadurch gekennzeichnet, daß der Gehalt an siliciumgebundenen Cl-Gruppen im Ausgangsgemisch 0,1 bis 5 Gew.-% beträgt.

7. Verfahren nach Anspruch 1, dadurch gekennzeichnet, daß das Ausgangsgemisch mindestens ein Silan der allgemeinen Formel
R¹ₓSi(OR)₄₋ₓ (VI),
wobei R¹ und R die oben angegebene Bedeutung aufweisen und x entweder 1 oder 2 ist und/oder dessen Teilhydrolysat, enthält.

8. Verfahren nach Anspruch 7, dadurch gekennzeichnet, daß das Silan der allgemeinen Formel (VI) mit 0,01 bis 10 Gew.-% im Ausgangsgemisch enthalten ist.

9. Verfahren nach Anspruch 1 bis 8, dadurch gekennzeichnet, daß zu dem nach der 1. Stufe erhaltenen homogenen Reaktionsgemisch in der 2. Stufe Wasser gegeben, dann die wäßrig-alkoholische Phase abgetrennt, das Polyorganosiloxanharz in mit Wasser nicht mischbaren Lösemittel gelöst und enthaltenes Wasser sowie Feststoff entfernt wird.

10. Verfahren nach Anspruch 1 bis 8, dadurch gekennzeichnet, daß das nach der 1. Stufe erhaltene homogene Reaktionsgemisch in der 2. Stufe durch Zugabe von Wasser und von mit Wasser nicht mischbaren Lösemittel in zwei Phasen getrennt und die, das Polyorganosiloxanharz enthaltende organische Phase
in einer 3. Stufe
durch Zusatz einer basisch reagierenden Verbindung auf einen pH-Wert größer 7 eingestellt und unter Abtrennung eines Alkohol/Wasser/Lösemittel-Gemisches kondensiert wird, dann das erhaltene Produkt
in einer 4. Stufe
durch Zugabe einer Säure und/oder Säure abspaltenden Verbindung neutralisiert, anschließend ggf. noch enthaltenes Wasser und ein Teil des Lösemittels entfernt sowie unlösliche Bestandteile abgetrennt werden.

11. Verfahren nach Anspruch 10, dadurch gekennzeichnet, daß die nach der 4. Stufe erhaltene Polyorganosiloxanharzlösung
in einer 5. Stufe
mit mindestens einer siliciumorganischen Verbindung der allgemeinen Formel
R¹ R³ R⁴SiO(R¹₂SiO)ₙSi R¹ R³ R⁴ (VII) und/oder
mit mindestens einer siliciumorganischen Verbindung der allgemeinen Formel
(R¹₂SiO)p (VIII),
wobei R³ und R⁴ unabhängig voneinander OH oder OR oder R¹ sind, wobei R und R¹ die oben angegebene Bedeutung aufweisen, n Werte zwischen 0 und 5000 und p Werte zwischen 3 und 8 annehmen,
vermischt und anschließend das Lösemittel vollständig entfernt wird.
